# EUROPEAN PATENT SPECIFICATION

(11) **EP 4 488 653 B1**
(45) Date of publication and mention of the grant of the patent: **13.08.2025**
(21) Application number: 24176295.4
(22) Date of filing: 16.05.2024
(51) Int. Cl.: G01N 3/08, G01N 3/42

(54) **MATERIALS TESTING PROBE**
MATERIALPRÜFSONDE
SONDE DE TEST DE MATÉRIAUX

(30) Priority: 07.07.2023 EP 23184101
(43) Date of publication of application: 08.01.2025
(73) Proprietor: Alemnis AG, 3645 Gwatt (Thun) (CH)
(72) Inventor: BREGUET, Jean-Marc, 6926 Montagnola (CH); HEIGENHAUSER, Benedikt, 3014 Berne (CH); FREY, Damian, 5037 Muhen (CH)
(74) Representative: Patentsmith SA

(56) References cited:
- WO-A1-2013/159940
- WO-A1-2015/193176
- US-A1- 2011 252 874

## Description

### Technical Field

The present invention relates to the field of materials testing. More specifically, it relates to a materials testing probe, a materials testing device incorporating such a materials testing probe, a method of carrying out a materials test using such a materials testing probe, and a particular use of such a probe.

### State of the Art

In the field of materials testing, indentation, scratch testing, tensile testing mechanical testing and so on are very well-established techniques for assessing material properties such as Young's modulus, hardness, ultimate tensile strength, coating adhesion force, viscoelastic properties, wire pull tests, ribbon bond tests, investigating mechanical properties of push-to-pull devices, 3D-printed microstructures and so on.

At micro and nano scales, various techniques have been developed for applying compressive and/or tensile forces, such as disclosed in US2011/317157. This document discloses a rather complex and elaborate arrangement, which is expensive to produce. US5866807 discloses a mechanical testing probe mounted on a very small cantilever acting in bending, which is limited in terms of the forces that can be applied, and the flexing of the cantilever results in significant differences between the probe position and the actuator position depending on the force applied to the sample. Furthermore, the flexing of the cantilever causes a lateral motion resulting in the tip not being perpendicular to the sample, creating further artefacts affecting the measurements. The foregoing issues must be compensated for in order to obtain very precise displacement and/or force measurements, and any variation in the probe stiffness from that modelled will result in errors.

WO2015/193176 describes the Alemnis AG "SmartTip" active indentation probe, which, in its commercialized form, has a total length of approximately 18 mm and a hollow tubular piezoelectric actuation device with a length of approximately 8mm. This piezoelectric tube is arranged as an actuator, in order to displace extremity of the probe perpendicular to an indentation direction for carrying out material tests. Strain gauges may be integrated in or on the actuation device or its housing. Due to the constraints required for the actuation, the tubular shape of the actuation device as well as a certain size are obligatory, and this arrangement is not further miniaturisable. Furthermore, the device as disclosed in WO2015/193176 is entirely unsuited to a passive application, since its entire purpose is for the piezoelectric tube to act as an actuator.

WO2013/159940 discloses multi-axial forque/torque sensors which utilise piezoresistive or piezoelectric strain gauges.

The aim of the present invention is hence to propose a materials testing probe in which at least some of the above-mentioned drawbacks are at least partially overcome.

### Disclosure of the Invention

More precisely, the invention relates to a materials testing probe for a materials testing device, as defined in claim 1. This materials testing probe comprises:
- a support adapted to be coupled to said materials testing device;
- a passive beam with a rectangular cross-section, having a length less than 5 mm, preferably less than 2 mm, further preferably less than 1mm, and extending from said support along a primary axis, said beam having a distal extremity adapted to cooperate directly or indirectly with a sample under test at least in a direction parallel to said primary axis, whether in tension or in compression. By "passive", it is meant that the beam does not comprise itself any active actuation, such as piezoelectric or other actuators arranged for causing it to flex.

Said beam comprises at least one measurement strain gauge configured to measure deformation of said beam in a direction parallel to said primary axis. Typically, one or two measurement strain gauges are provided in or on one side of the beam, but at least one measurement strain gauge in or on each of different, opposite sides of the beam are possible. A particular configuration of at least four strain gauges distributed in parallel pairs in or on both sides of the beam is also possible, and permits measurements to be taken not only parallel to the primary axis, but also for the two axes perpendicular thereto. Furthermore, and particularly in the case of scratch tests, yet further measurement strain gauges arranged to measure flexion of the beam in one or more directions are also possible, for instance situated abutting the support in order to tune the lateral sensitivity to flexion to an adequate value, for instance to get a lateral sensitivity comparable to the axial sensitivity.

By using such a beam primarily, or even exclusively, in compression or tension, its effective stiffness when applying force to a sample is increased, improving the measurement accuracy compared to prior art arrangements where such beams are used in flexion. Furthermore, the strain of the beam (and hence the force applied to the sample) is measured on the beam itself, reducing parasitic elastic deformation and further increasing measurement precision. Secondarily, such beams are very economical to fabricate and can be fabricated very precisely and in batches.

Advantageously, said at least one measurement strain gauge is at least one a resistive or piezoresistive strain gauge.

In one variant, the beam is monolithic, but it may alternatively have a multi-layer structure comprising a core of a first material sandwiched between at least two outer layers of a second material. In such a case, the first material typically has a lower Young's modulus than the second material. Such a construction permits the use of relatively flexible materials for the core, which is of particular interest to increase the sensitivity while keeping the force range high enough since the buckling force is increased while axial stiffness remains moderate.

In the case of a multi-layer beam, said at least one measurement strain gauge may be embedded in said beam in contact with at least one of said outer layers on an interior side thereof, i.e. in contact with both the outer layer and the core.

Alternatively, and independently of the structure of the beam, said at least one measurement strain gauge may be provided on at least one outer surface of said beam.

Advantageously, at least one measurement strain gauge is situated with its part which is nearest to said support at a distance from said support of at least 20%, preferably at least 50%, further preferably at least 70%, of the total length of said beam. By situating at least some of the measurement strain gauges nearer to the distal extremity of the beam, they are optimized for measuring compression or tension and minimize the effect of any lateral force which is present, thereby privileging the axial measurement and minimizing any artefacts due to lateral forces.

Advantageously, at least one reference strain gauge (preferably two or more) is provided in or on said support. This is not solicited during a materials test and can be used as the reference in a Wheatstone bridge circuit or similar arrangement.

Typically, one or more of the following measurements is exhibited:
- beam length between 40 µm and 600 µm;
- beam width less than 200 µm, preferably between 20 µm and 120 µm;
- beam thickness less than 20 µm, preferably between 100 nm and 10 µm;
- nearest part of at least one measurement strain gauge to support between 8 µm and 550 µm, preferably between at least 20 µm and 550 µm;
- lateral displacement from primary axis to nearest edge of at least one measurement strain gauge between 0 µm and 50 µm.

Advantageously, said distal extremity comprises one of:
- a flat punch;
- a pyramid;
- a cone;
- any other desired shape of end effector;
- an interface adapted for supporting an end effector such as an additional indentation or scratch probe;
- a gripper adapted for directly or indirectly holding a tensile test sample;
- a conductive interface.

The invention also relates to a materials testing device comprising:
- a base supporting a sample holder;
- a headstock supporting a materials testing probe as defined above;
- a controller adapted to receive signals from said at least one measurement strain gauge;
wherein said materials testing device is adapted such that said materials testing probe is displaceable relative to said sample holder at least along said primary axis, e.g. by moving the sample holder or the materials testing probe.

Furthermore, the invention relates to a method of carrying out a materials test, comprising steps of:
- providing a materials testing probe as defined above;
- providing a sample on a sample holder;
- displacing said materials testing probe relative to said sample holder at least along said primary axis to as to apply at least a compressive or a tensile force to said sample, optionally a lateral displacement applying a lateral force in one or more directions perpendicular to the primary axis may also be applied, e.g. in the case of a scratch test. The desired displacements are obtained e.g. by moving the sample holder with respect to the materials testing probe or vice-versa;
- taking measurements by means of said at least one measurement strain gauge, which can then be used to calculate the force applied to the sample.

This method can advantageously be carried out using a materials testing device as defined above.

The invention also relates to the use of a materials testing tip as defined above for force measurements at least in a direction parallel to said primary axis during materials testing.

### Brief description of the Drawings

Further details of the invention will become apparent upon reading the description below, in reference to the appended drawings in which:
- Figure 1 is a schematic isometric view of a materials testing probe according to the invention;
- Figure 2 is an enlarged view of the zone indicated by the circle B on figure 1;
- Figure 3 is a schematic isometric view of a beam for a materials testing probe, with a three layer construction;
- Figure 4 is a schematic longitudinal cutaway view of the beam of figure 3, the cut being made through a measurement strain gauge parallel to the length and thickness directions;
- Figure 5 is a schematic plan view of the distal extremity of a beam, arranged for tensile testing;
- Figure 6 is a schematic isometric view of a variant of a beam 5 for a materials testing probe, with an added end effector;
- Figure 7 is a cross-sectional view perpendicular to the principal axis and passing through the measurement strain gauges of a variant of a beam for a materials testing probe; and
- Figure 8 is a schematic view of a materials testing device.

### Embodiments of the Invention

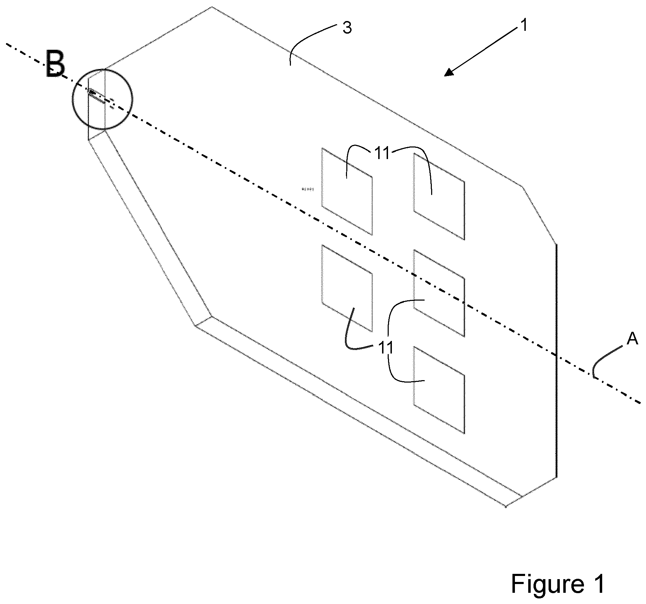

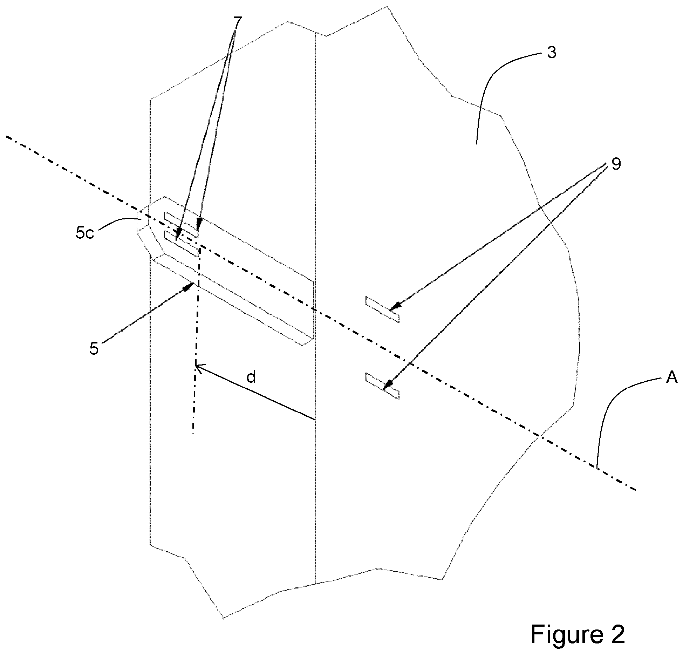

Figures 1 and 2 illustrate a materials testing probe 1 according to the invention. This probe 1 comprises a support 3, often referred to as a "chip", adapted to interface with a materials testing device as known in the art. This materials testing device may be arranged to carry out one or more of the following types of materials / mechanical tests: indentation tests, scratch tests, tensile tests, ribbon pull tests, coating adhesion tests, investigating mechanical properties of push-to-pull devices, 3D-printed microstructures, etc.

Support 3 serves as a base for a beam 5, which extends from a surface thereof along a primary axis A, beam 5 being either integrated with the support 3, or attached thereto. Beam 5 is of rectangular cross-section and has a length (parallel to primary axis A) of less than 5mm, preferably less **than 2 mm,** further preferably less than 1mm, and indeed typically between 40 *µ*m and 600 *µ*m, a width (perpendicular to primary axis A and parallel to the plane of the support 3) of less than 200 *µ*m, typically between 20 *µ*m and 120 *µ*m, and a thickness (perpendicular to the primary axis A and to the plane of the support 3) of less than 20 *µ*m, preferably between 100 nm and 10 *µ*m. Furthermore, beam 5 typically has a uniform thickness, any thicker portion being considered as being part of the support 3. It should be noted that beam 5 is solid and is not hollow.

The support 3 typically has a length (parallel to primary axis A) of between 3mm and 10 mm, a width (perpendicular to primary axis A and parallel to the plane of the support 3) of between 2 mm and 7mm, and a thickness of 200 *µ*m to 500 *µ*m.

The distal extremity 5c of beam 5 is specifically adapted to cooperate with a sample under test, as will be described in more detail below. It should be noted that beam 5 itself does not comprise any laterally extending lateral probes intended to come into contact with a sample during measurements which use the beam 5 primarily or exclusively in flexion.

The support 3 and the beam 5 may be monolithic, for instance made from micromachined silicon, silicon dioxide, diamond-like carbon, ceramics, glass, glass ceramics, silicon carbide, silicon nitride or similar, and supports at least one strain gauge 7 (of which two are illustrated on figure 2). Alternatively, a three-layer MEMS construction may be used.

At least one measurement strain gauge 7 provided on or in the beam 5 is adapted to measure deformation of the beam 5 parallel to the primary axis A, i.e. axial compression or tension. Optional reference strain gauges 9 may also be provided in or on the support 3, in order that the reference strain gauges 9 are subjected to the same temperature and other environmental conditions as the measurement strain gauge(s) 7. Electrical contacts 11 are provided on the support 3, in electrical connection with the various strain gauges 7, 9 via suitable electrical connections (not illustrated, typically made of metal or transparent conductive oxide) provided upon or within the structure of the materials testing probe 1, in order to connect the strain gauges 7, 9 to a measurement circuit such as a half or full Wheatstone bridge circuit, as is generally known for measuring strain by means of (piezo)resistive strain gauges. Furthermore, a conductive coating in electrical connection with one of the electrical contacts 11 may be provided in order to ground the beam 5 against the parasitic influence of e.g. electron beams when used in conjunction with electron microscopy, or beta radiation when used in radioactive environments.

In the case of a monolithic beam 5, the measurement strain gauges 7 are typically formed on the surface of the beam 5, whereas in a three-layer (or more than three-layer) construction), they are typically embedded in the structure of the beam 5, although they may also be formed on the surface thereof in such a case. In a three-layer construction, two outer layers are provided either side of a core, the outer layer thickness typically being less than 2 *µ*m, more typically between 50 nm and 1 *µ*m.

The location of the rearmost part of measurement strain gauge(s) 7 from the support 3 is at a distance d from this latter, d being typically between at least 20% of the total length of the beam 5, preferably at least 50% of the total length of the beam 5, or even at least 70% thereof, bearing in mind that any thicker portion of the beam 5 is considered as part of the support 3 due to its significantly higher rigidity than the remainder of the beam 5. The lateral displacement from the primary axis to the nearest edge of each strain gauge 7 is typically up to 50 *µ*m. Each strain gauge 7, 9 typically has a length of between 10 *µ*m and 80 *µ*m, a width of 2 *µ*m to 6 *µ*m, and a thickness of 50 nm to 200 nm, length, width and height being defined in the same manner as for the beam 5. By situating at least some measurement strain gauges 7, if not all of them, closer to the distal extremity of the beam 5, the measurement accuracy parallel to the primary axis A can be improved, since the artefacts caused by any bending of the material of the beam 5 are thereby reduced.

The strain gauge(s) 7, 9 are typically resistive or piezoresistive, and the beam 5 is passive, that is to say that it does not contain any actuators for causing it to flex, displacement of the distal extremity 5c thereof being effected by an actuator to which is attached the support 3 and moves the entire support 3 and beam 5. Alternatively, the probe 1 can remain fixed and the sample can be moved with respect thereto, or both the probe 1 and the sample can be moved. It should be noted that the dimensions of the beam indicated above are in any case incompatible with actuators integrated therein, which, even if such integration were possible, would not result in displacements of the distal extremity 5c that would be of any use whatsoever.

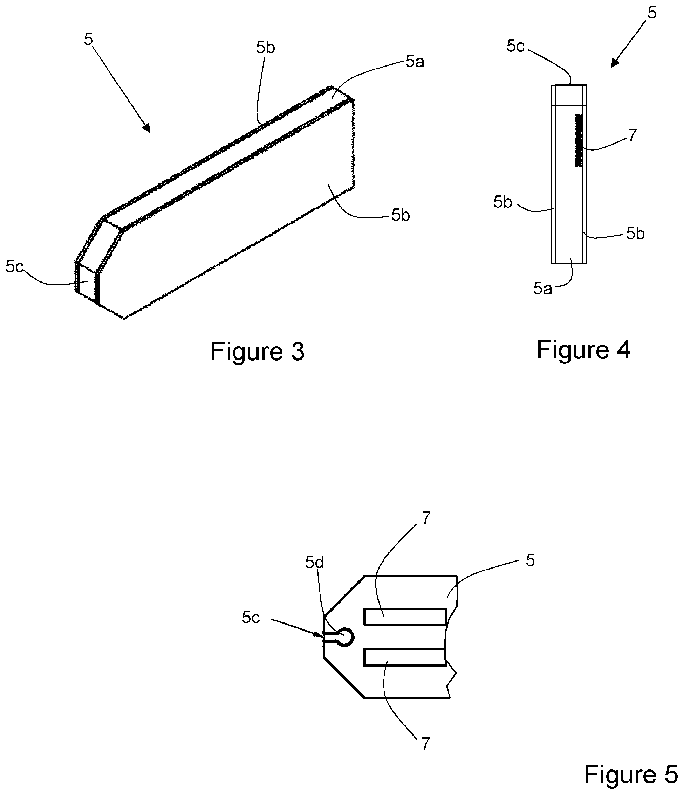

Figures 3 and 4 illustrate a beam 5 constructed according to a three-layer structure, and comprises generally a core 5a of a first material sandwiched between two outer layers 5b of a second material with a Young's modulus greater than the first material. Advantageously, the core 5a is of polymer (e.g. SU-8, Parylene, PMMA, polyimide, bulk molding compound BMC or PDMS) and is sandwiched between two outer layers 5b of a more rigid material such as quartz, GaAs, SiO₂, SiN, Si, Al₂O₃, SiC, diamond-like carbon, mono- or polycrystalline diamond, or even metals such as Al, Cu, Ni, Fe or W. Silicon nitride is however preferred. The thickness of outer layers 5b is typically less than 2 *µ*m, more typically between 50 nm and 1 *µ*m. As noted above, the measurement strain gauges 7 are incorporated into the structure of the beam 5 in such an arrangement, in contact with the inside face of one or both of the outer layers 5b, and are hence invisible in figure 3 and only visible on figure 4.

Such trilayer beams 5 with a polymer core 5a permit a compromise between the sensitivity and the force range. Since the core is less stiff, notably in compression, this permits a relatively high maximum measurable force without diminishing the sensitivity since the core is less stiff than using more rigid materials.

In figures 1-3, the distal extremity 5c of the beam 5 is shaped as a flat punch for indentation or scratch tests.

Figure 5 illustrates a variant of beam 5, in which the distal end 5c thereof comprises an interface 5d for directly or indirectly holding an end of a sample for a tensile test, (typically a dog-bone shaped sample), or for holding an indentation or scratch probe which is not integrally formed as part of the beam 5. To this end, the interface 5d is formed as a keyway in the body of the beam 5, into which either a sample, a gripper, or separate probe can be introduced and retained.

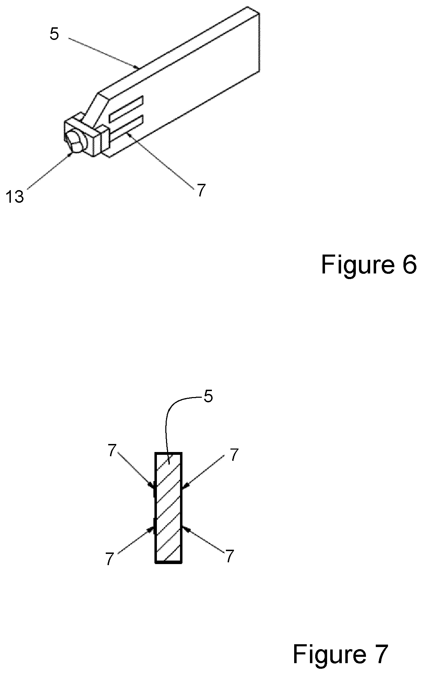

Figure 6 illustrates a variant of beam 5, to which a triangular pyramidal end effector 13 (e.g. an indenter) has been attached, either via an interface 5d as in figure 5, or by deposition, growth, welding, bonding or similar. Other shapes of end effector are known to the skilled person and can be utilized as appropriate.

It should be noted that the distal extremity 5c of the beam 5 and/or the element attached thereto may be coated with a functionalized coating, such as a thermal resistive coating, a non-reactive coating, a conductive coating or similar. In the case of a conductive coating, this may be in electrical connection with an electrical contact 11 so as to enable electrical tests to be carried out on a sample or in order to ground the beam to reduce the effects of electron beams or beta radiation thereupon, preventing buildup of static charge.

It should also be noted that it is possible to arrange measurement strain gauges 7 on both sides of the body 5, as illustrated in figure 7, in which the measurement strain gauges 7 are arranged in parallel pairs, but other configurations are possible. In the case of parallel pairs as in figure 7, it is also possible to measure strain, and hence force applied, in directions perpendicular to the primary axis A.

In use, the materials testing probe 1 of the invention is primarily used to apply force axially, i.e. parallel to principal axis A, in either tensile testing, indentation testing, wire pull testing, ribbon pull testing or similar. However, the probe 1 can also be used for scratch testing, in which an axial force is applied to the surface of a sample by the probe which is subsequently displaced laterally thereto under a constant or varying force, in order to form a scratch therein. In such a case, the scratch direction is perpendicular to the plane of the beam 5, in order to maximize flexion, however flexing parallel to the plane of the beam is also not excluded. In such a case, further measurement strain gauges 7 may be provided, e.g. adjacent to the support 3, arranged as required to measure flexion of the beam 5 parallel and/or perpendicular to its plane.

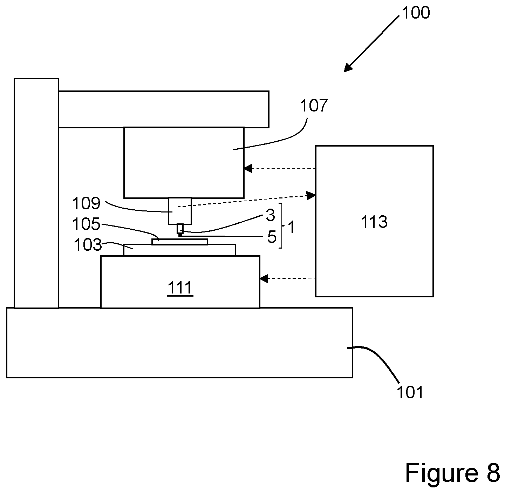

Figure 8 illustrates a nonlimiting variant of a materials testing device 100 suitable for use with the materials testing probe 1 of the invention. This materials testing device 100 comprises a base 101, which directly or indirectly supports a sample holder 103 adapted to support a sample 105 for carrying out any of the types of materials tests mentioned above. The device 100 may be arranged to work in air, in a scanning electron microscope chamber, or any other environmental conditions.

In order to support the materials testing probe 1, a headstock 107 is provided, and is adapted to hold the materials testing probe by its support 3, with the distal extremity 3a of the beam 5 facing the sample holder 103 and hence the sample 5.

The materials testing device 100 is configured so as to permit controlled relative movement between the materials testing probe 1 and the sample holder 103, and to this end, an actuator 109 may be provided between the materials testing probe 1 and the headstock 107, and/or an actuator 111 may be provided between the base 101 and the sample holder 103. At least one of these actuators 109, 111 is arranged to cause relative displacement of the sample holder 103 with respect to the materials testing probe 1 (or vice-versa) at least in parallel to the primary axis A. A typical but non-limiting configuration is for actuator 107 to have one degree of freedom in translation parallel to the primary axis A, and actuator 111 to have at least one degree of freedom in translation perpendicular to primary axis A, although any combination of degrees of freedom, both linear and in rotation, is possible.

A controller 113 is adapted to control this relative displacement and/or to receive signals from the strain gauge(s) 7, 9 (as appropriate). The signals from the strain gauges are decoded by the controller 113 into force measurements on the basis of the well-known Hooke's law, the stiffness of the beam 5 in the corresponding directions having been previously determined by either measurement or calculation. Calibration of the load signal can be carried out by standard means as known in the art.

Although the invention has been described in terms of specific embodiments, variations thereto are possible without departing from the scope of the appended claims.

## Claims

1. Materials testing probe (1) for a materials testing device (100), comprising:
- a support (3) adapted to be coupled to said materials testing device (100);
- a passive beam (5) with a rectangular cross-section and having a length less than 5mm and extending from said support (3) along a primary axis (A), said beam (5) having a distal extremity (5c) adapted to cooperate with a sample (105) under test at least in a direction parallel to said primary axis (A);
wherein said beam (5) comprises at least one measurement strain gauge (7) configured to measure deformation of said beam (5) at least in a direction parallel to said primary axis (A), and wherein said beam (5) does not comprise any active actuation or actuators for causing it to flex.

2. Materials testing probe (1) according to the preceding claim, wherein said at least one measurement strain gauge (7) is at least one resistive or piezoresistive strain gauge.

3. Materials testing probe (3) according to any preceding claim, wherein said beam (5) is monolithic.

4. Materials testing probe (3) according to one of claims 1 or 2, wherein said beam comprises a core (5a) of a first material sandwiched between at least two outer layers (5b) of at least a second material.

5. Materials testing probe (1) according to the preceding claim, wherein said at least one measurement strain gauge (7) is embedded in said beam (5) in contact with at least one of said outer layers (5b), on an interior side thereof.

6. **Materials** testing probe (1) according to one of claims 1-4, wherein said at least one measurement strain gauge (7) is provided on at least one outer surface of said beam (5).

7. Materials testing probe (1) according to any preceding claim, wherein the nearest part of at least one measurement strain gauge (7) to said support (3) is situated a distance from said support (3) of at least 20%, preferably at least 50%, further preferably at least 70%, of the total length of said beam (5).

8. Materials testing probe (1) according to any preceding claim, wherein at least one reference strain gauge (9) is provided in or on said support (3).

9. Materials testing probe (1) according to any preceding claim, comprising two measurement strain gauges (7) arranged parallel to one another in or on a same side of said beam (5).

10. Materials testing probe (1) according to any preceding claim, comprising at least two measurement strain gauges (7) arranged on opposite sides of said beam (5).

11. Materials testing probe (1) according to any preceding claim, wherein at least one of the following measurements is exhibited:
- beam (5) length between 40 *µ*m and 600 *µ*m;
- beam (5) width less than 200 *µ*m, preferably between 20 *µ*m and 120 *µ*m;
- beam (5) thickness less than 20 *µ*m, preferably between 100 nm and 10 *µ*m;
- nearest part of at least one measurement strain gauge (7) to support (3) between 8 *µ*m and 550 *µ*m, preferably between 20 µm and 550 µm;
- lateral displacement from primary axis (A) to nearest edge of at least one measurement strain gauge (7) between 0 *µ*m and 50 *µ*m.

12. Materials testing probe (1) according to any preceding claim, wherein said distal extremity (5c) comprises or carries one of:
- a flat punch;
- a pyramid;
- a cone;
- an interface adapted for supporting an end effector;
- a gripper adapted for directly or indirectly holding a tensile test sample;
- a conductive interface.

13. Materials testing device (100) comprising:
- a base (101) supporting a sample holder (103);
- a headstock (107) supporting a materials testing probe (1) according to any preceding claim;
- a controller (113) adapted to receive signals from said at least one measurement strain gauge (7, 9);
wherein said materials testing device (100) is adapted such that said materials testing probe (1) is displaceable relative to said sample holder (103) at least along said primary axis (A).

14. Method of carrying out a materials test, comprising steps of:
- providing a materials testing probe (1) according to any of claims 1 to 12 ;
- providing a sample (105) on a sample holder (103);
- displacing said materials testing probe (1) with respect to said sample holder (103) at least along said primary axis (A) to as to apply at least a compressive or a tensile force to said sample (105);
- taking measurements by means of said at least one measurement strain gauge (7).

15. Use of a materials testing probe (1) according to any of claims 1-12 for force measurements at least in a direction parallel to said primary axis (A) during materials testing.

## Patentansprüche

1. Materialprüfsonde (1) für eine Materialprüfvorrichtung (100), umfassend:
- einen Träger (3), der mit der Materialprüfvorrichtung (100) verbunden werden kann;
- einen passiven Balken (5) mit rechteckigem Querschnitt und einer Länge von weniger als 5 mm, der sich vom Träger (3) entlang einer Hauptachse (A) hinaus erstreckt, wobei der Balken (5) ein distales Ende (5c) aufweist, das mit einer zu prüfenden Probe (105) zumindest in einer Richtung parallel zu der Hauptachse (A) zusammenwirken kann;
wobei der Balken (5) mindestens einen Mess-Dehnungsmessstreifen (7) umfasst, der so konfiguriert ist, dass er die Verformung des Balkens (5) mindestens in einer Richtung parallel zu der Hauptachse (A) misst, und wobei der Balken (5) keine aktive Betätigung oder Aktuatoren umfasst, um ihn zum verbiegen zu bringen.

2. Materialprüfsonde (1) nach dem vorhergehenden Anspruch, wobei der mindestens eine Mess-Dehnungsmessstreifen (7) mindestens ein resistiver oder piezoresistiver Dehnungsmessstreifen ist.

3. Materialprüfungssonde (3) nach einem der vorhergehenden Ansprüche, wobei der Balken (5) monolithisch ist.

4. Materialprüfsonde (3) nach einem der Ansprüche 1 oder 2, wobei der Balken einen Kern (5a) aus einem ersten Material aufweist, der zwischen mindestens zwei Außenschichten (5b) aus mindestens einem zweiten Material liegt.

5. Materialprüfsonde (1) nach dem vorhergehenden Anspruch, wobei der mindestens eine Dehnungsmessstreifen (7) in den Balken (5) in Kontakt mit mindestens einer der Außenschichten (5b) auf einer Innenseite davon eingebettet ist.

6. Materialprüfsonde (1) nach einem der Ansprüche 1 bis 4, wobei der mindestens eine Mess-Dehnungsmessstreifen (7) auf mindestens einer Außenfläche des Balkens (5) vorgesehen ist.

7. Materialprüfsonde (1) nach einem der vorhergehenden Ansprüche, wobei der dem Träger (3) nächstgelegene Teil des mindestens einen Dehnungsmessstreifens (7) in einem Abstand von mindestens 20 %, vorzugsweise mindestens 50 %, weiter vorzugsweise mindestens 70 %, der Gesamtlänge des Balkens (5) angeordnet ist.

8. Materialprüfsonde (1) nach einem der vorhergehenden Ansprüche, wobei mindestens ein Referenz-Dehnungsmessstreifen (9) in oder an dem Träger (3) vorgesehen ist.

9. Materialprüfsonde (1) nach einem der vorhergehenden Ansprüche, umfassend zwei Mess-Dehnungsmessstreifen (7), die parallel zueinander in oder auf derselben Seite des Balkens (5) angeordnet sind.

10. Materialprüfsonde (1) nach einem der vorhergehenden Ansprüche, mit mindestens zwei Dehnungsmessstreifen (7), die auf gegenüberliegenden Seiten des Balkens (5) angeordnet sind.

11. Materialprüfsonde (1) nach einem der vorhergehenden Ansprüche, wobei mindestens eine der folgenden Messungen abgebildet wird:
- Länge des Balkens (5) zwischen 40 µm und 600 µm;
- Breite des Balkens (5) weniger als 200 µm, vorzugsweise zwischen 20 µm und 120 µm;
- Dicke des Balkens (5) weniger als 20 µm, vorzugsweise zwischen 100 nm und 10 µm;
- nächstgelegener Teil des mindestens einen Dehnungsmessstreifens (7) zum Träger (3) zwischen 8 µm und 550 µm, vorzugsweise zwischen 20 µm und 550 µm;
- seitliche Verschiebung von der Hauptachse (A) zum nächstgelegenen Rand des mindestens einen Dehnungsmessstreifens (7) zwischen 0 µm und 50 µm.

12. Materialprüfsonde (1) nach einem der vorhergehenden Ansprüche, wobei das distale Ende (5c) eines der folgenden Elemente umfasst oder trägt:
- eine flache Stanze;
- einer Pyramide
- einem Kegel;
- eine Schnittstelle, die zur Aufnahme eines Endeffektors geeignet ist;
- einen Greifer, der zum direkten oder indirekten Halten einer Zugprobe geeignet ist;
- eine leitende Schnittstelle.

13. Materialprüfgerät (100) mit:
- eine Basis (101), die einen Probenhalter (103) trägt;
- einen Spindelstock (107), der eine Materialprüfsonde (1) nach einem der vorhergehenden Ansprüche trägt;
- eine Steuereinheit (113), die zum Empfangen von Signalen von dem mindestens einen Dehnungsmessstreifen (7, 9) eingerichtet ist;
wobei die Materialprüfvorrichtung (100) so eingerichtet ist, dass die Materialprüfsonde (1) relativ zu dem Probenhalter (103) zumindest entlang der Hauptachse (A) verschiebbar ist.

14. Verfahren zur Durchführung einer Materialprüfung, das die folgenden Schritte umfasst:
- Bereitstellen einer Materialprüfsonde (1) nach einem der Ansprüche 1 bis 12;
- Bereitstellen einer Probe (105) auf einem Probenhalter (103);
- Verschieben der Materialprüfsonde (1) in Bezug auf den Probenhalter (103) zumindest entlang der Hauptachse (A), um zumindest eine Druck- oder Zugkraft auf die Probe (105) auszuüben;
- Durchführung von Messungen mit Hilfe des mindestens einen Dehnungsmessers (7).

15. Verwendung einer Materialprüfsonde (1) nach einem der Ansprüche 1-12 für Kraftmessungen zumindest in einer Richtung parallel zur Hauptachse (A) während der Materialprüfung.

## Revendications

1. Sonde d'essai de matériaux (1) pour un dispositif d'essai de matériaux (100), comprenant :
- un support (3) adapté pour être couplé audit dispositif d'essai de matériaux (100) ;
- une poutre passive (5) de section rectangulaire et de longueur inférieure à 5 mm s'étendant depuis ledit support (3) selon un axe primaire (A), ladite poutre (5) présentant une extrémité distale (5c) adaptée pour coopérer avec un échantillon (105) sous essai au moins dans une direction parallèle audit axe primaire (A) ;
dans laquelle ladite poutre (5) comprend au moins une jauge de contrainte de mesure (7) configurée pour mesurer une déformation de ladite poutre (5) au moins dans une direction parallèle audit axe primaire (A), et dans laquelle ladite poutre (5) ne comprend pas d'actuation active ou d'actionneurs pour la faire fléchir.

2. Sonde d'essai de matériaux (1) selon la revendication précédente, dans laquelle ladite au moins une jauge de contrainte de mesure (7) est au moins une jauge de contrainte résistive ou piézorésistive.

3. Sonde d'essai de matériaux (3) selon l'une quelconque des revendications précédentes, dans laquelle ladite poutre (5) est monolithique.

4. Sonde d'essai de matériaux (3) selon l'une des revendications 1 ou 2, dans laquelle ladite poutre comprend un noyau (5a) d'un premier matériau pris en sandwich entre au moins deux couches externes (5b) d'au moins un second matériau.

5. Sonde d'essai de matériaux (1) selon la revendication précédente, dans laquelle ladite au moins une jauge de contrainte de mesure (7) est encastrée dans ladite poutre (5) en contact avec au moins une desdites couches externes (5b), sur une face intérieure de cette dernière.

6. Sonde d'essai de matériaux (1) selon l'une des revendications 1 à 4, dans laquelle ladite au moins une jauge de contrainte de mesure (7) est prévue sur au moins une surface extérieure de ladite poutre (5).

7. Sonde d'essai de matériaux (1) selon l'une des revendications précédentes, dans laquelle la partie la plus proche d'au moins une jauge de contrainte de mesure (7) audit support (3) est située à une distance dudit support (3) d'au moins 20 %, de préférence au moins 50 %, de préférence encore au moins 70 %, de la longueur totale de ladite poutre (5).

8. Sonde d'essai de matériaux (1) selon l'une quelconque des revendications précédentes, dans laquelle au moins une jauge de contrainte de référence (9) est prévue dans ou sur ledit support (3).

9. Sonde d'essai de matériaux (1) selon l'une quelconque des revendications précédentes, comprenant deux jauges de contrainte de mesure (7) disposées parallèlement l'une par rapport à l'autre dans ou sur un même côté de ladite poutre (5).

10. Sonde d'essai de matériaux (1) selon l'une quelconque des revendications précédentes, comprenant au moins deux jauges de contrainte de mesure (7) disposées sur des côtés opposés de ladite poutre (5).

11. Sonde d'essai de matériaux (1) selon l'une quelconque des revendications précédentes, dans laquelle au moins l'une des mesures suivantes est exposée :
- longueur de la poutre (5) comprise entre 40 µm et 600 µm ;
- largeur de la poutre (5) inférieure à 200 µm, de préférence entre 20 µm et 120 µm ;
- épaisseur de la poutre (5) inférieure à 20 µm, de préférence comprise entre 100 nm et 10 µm ;
- partie la plus proche d'au moins une jauge de contrainte de mesure (7) par rapport au support (3) comprise entre 8 µm et 550 µm, de préférence entre 20 µm et 550 µm ;
- déplacement latéral depuis l'axe primaire (A) jusqu'au bord le plus proche d'au moins une jauge de contrainte de mesure (7) entre 0 µm et 50 µm.

12. Sonde d'essai de matériaux (1) selon l'une quelconque des revendications précédentes, dans laquelle ladite extrémité distale (5c) comprend ou porte l'un des éléments suivants :
- un poinçon plat ;
- une pyramide ;
- un cône ;
- une interface adaptée au support d'un effecteur terminal ;
- une pince adaptée pour tenir directement ou indirectement un échantillon d'essai de traction ;
- une interface conductrice.

13. Dispositif d'essai de matériaux (100) comprenant
- une base (101) supportant un porte-échantillon (103) ;
- une poupée (107) supportant une sonde d'essai de matériaux (1) selon l'une quelconque des revendications précédentes ;
- un contrôleur (113) adapté pour recevoir des signaux de ladite au moins une jauge de contrainte de mesure (7, 9) ;
dans lequel ledit dispositif d'essai de matériaux (100) est adapté de telle sorte que ladite sonde d'essai de matériaux (1) soit déplaçable par rapport audit porte-échantillon (103) au moins le long dudit axe primaire (A).

14. Méthode d'exécution d'un essai de matériaux, comprenant les étapes suivantes
- fournir une sonde d'essai de matériaux (1) selon l'une quelconque des revendications 1 à 12 ;
- fournir un échantillon (105) sur un porte-échantillon (103) ;
- déplacer ladite sonde d'essai de matériaux (1) par rapport audit porte-échantillon (103) au moins le long dudit axe primaire (A) afin d'appliquer au moins une force de compression ou de traction sur ledit échantillon (105) ;
- effectuer des mesures au moyen de ladite au moins une jauge de contrainte (7).

15. Utilisation d'une sonde d'essai de matériaux (1) selon l'une quelconque des revendications 1 à 12 pour mesurer la force au moins dans une direction parallèle à l'axe primaire (A) pendant un essai de matériaux.
